(19) Europäisches Patentamt
European Patent Office
Office européen des brevets

(11) **EP 4 135 962 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **21719562.7**

(22) Anmeldetag: **13.04.2021**

(51) Internationale Patentklassifikation (IPC):
**B29C 45/26** (2006.01)  **B29C 45/42** (2006.01)
**B29K 105/00** (2006.01)

(52) Gemeinsame Patentklassifikation (CPC):
**B29C 45/261;** B29C 45/4225; B29K 2105/258;
B29K 2995/0094

(86) Internationale Anmeldenummer:
**PCT/EP2021/059515**

(87) Internationale Veröffentlichungsnummer:
**WO 2021/209428 (21.10.2021 Gazette 2021/42)**

(54) **SPRITZGIESSWERKZEUG MIT OPTIMIERTER SPRITZGIESSWERKZEUGPLATTE**

INJECTION MOLD COMPRISING AN OPTIMIZED INJECTION MOLD PLATE

MOULE D'INJECTION COMPRENANT UNE PLAQUE DE MOULE D'INJECTION OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2020 DE 102020110565**

(43) Veröffentlichungstag der Anmeldung:
**22.02.2023 Patentblatt 2023/08**

(60) Teilanmeldung:
**24210089.9 / 4 477 396**
**24210093.1 / 4 477 397**
**24210099.8 / 4 477 398**

(73) Patentinhaber: **MHT Mold & Hotrunner Technology AG**
**65239 Hochheim (DE)**

(72) Erfinder:
• **WAGNER, Christian**
**55126 Mainz (DE)**
• **SÜSS, Peter**
**64409 Messel (DE)**
• **TILSNER, Christian**
**64331 Weiterstadt (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
**EP-A1- 3 569 381   US-A- 4 126 291**
**US-B2- 9 956 708**

• **"MOULD STORY", EUROPEAN PLASTICS NEWS, EMAP BUSINESS PUBLICATION, LONDON, GB, vol. 31, no. 10, 1 November 2004 (2004-11-01), pages 34/35, XP001214228, ISSN: 0306-3534**

**Beschreibung**

Die vorliegende Erfindung betrifft eine Spritzgießmaschine mit einem Spritzgießwerkzeug mit einer Spritzgießwerkzeugplatte zur Herstellung von Vorformlingen mit einer Vielzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist.

Das Spritzgießen ist eines der wichtigsten Verfahren zur Herstellung von Kunststoffformteilen. Hier wird die im Allgemeinen ursprünglich als Pulver oder Granulat vorliegende Formmasse erhitzt, plastifiziert und unter hohem Druck in ein entsprechendes Formwerkzeug gedrückt. Die Formmasse erstarrt in dem Formwerkzeug und wird anschließend dem geöffneten Werkzeug entnommen. Beispielsweise werden handelsübliche PET-Flaschen durch Streckblasformen eines Hohlkörpervorformlings hergestellt. Dabei wird der Vorformling in einem ersten Schritt mittels Spritzgießen erstellt. Dass sich an den Spritzgießvorgang anschließende Streckblasformen kann entweder unmittelbar nach Herstellung des Vorformlings oder zu einem späteren Zeitpunkt erfolgen.

Bei der Herstellung der entsprechenden Spritzgießformen ist ein hoher Aufwand von Nöten, da die Spritzgießform einerseits für sehr hohe Drücke ausgelegt sein muss und andererseits entsprechend beheizte und/oder gekühlten Kanäle aufweisen muss. Damit verbunden ist ein hoher Verschleiß, der eine regelmäßige Aufarbeitung der Spritzgießwerkzeugplatte oder von deren Teilen erfordert, was die Kosten nach oben treibt.

Auch wenn die vorliegende Erfindung prinzipiell in Spritzgießwerkzeugen jeglicher Art verwendet werden könnte, wird sie im Folgenden anhand eines Spritzgießwerkzeuges zur Herstellung von PET-Vorformlingen beschrieben. Solche Spritzgießwerkzeuge weisen eine Vielzahl, z.B. 96, Kavitäten auf, in die entsprechend ausgebildete Werkzeugkerne eingeführt werden. Bei geschlossenem Werkzeug, d.h., wenn der Kern in die entsprechende Kavität eingesetzt ist, wird zwischen dem Kern einerseits und der Kavität andererseits ein Raum, der sogenannte Formraum gebildet. In diesen Raum wird dann der plastifizierte Kunststoff, d.h. in dem hier beschriebenen Beispiel PET, unter hohem Druck eingespritzt. Sobald der PET-Vorformling genügend abgekühlt ist, kann die Form geöffnet und der Vorformling entnommen werden. Um die Zykluszeiten, d.h. die Zeit von einem Spritzvorgang bis zu dem nächsten Spritzvorgang, zu reduzieren, ist es bereits üblich, den Vorformling zu einem sehr frühen Zeitpunkt aus der Form zu entnehmen, zu dem der Vorformling an seinen Außenflächen bereits fest ist, dessen innerer Bereich jedoch noch flüssig ist. In diesem Zustand wird der Vorformling im Allgemeinen in eine sogenannte Entnahmeplatte übergeben, die einen Satz aus Aufnahmekavitäten aufweist.

Dabei umfasst der Aufnahmekavitätensatz so viele Aufnahmekavitäten wie das Werkzeug Kerne bzw. Kavitäten hat, sodass von jedem Kern der erstarrte Vorformling in eine Aufnahmekavität übergeben werden kann.

Bei der Herstellung von Vorformlingen weisen die Spritzgießwerkzeuge zwei Werkzeughälften auf, die zwischen einer offenen und einer geschlossenen Position hin und her bewegt werden können. Die eine Werkzeughälfte weist die sogenannte Kavitätenplatte auf, die eine Vielzahl von in Spalten und Reihen angeordnete Kavitäten hat, wobei der Abstand r zwischen benachbarten Kavitäten innerhalb der Reihen größer als der Abstand s zwischen benachbarten Kavitäten innerhalb der Spalten ist. Die andere Werkzeughälfte weist eine Kernplatte auf, die entsprechende Kerne aufweist, die im geschlossenen Zustand der Werkzeugform innerhalb der Kavitäten angeordnet sind. Daher sind auch die Kerne in einer Vielzahl von Spalten und Reihen angeordnet, wobei der Abstand r zwischen benachbarten Kernen innerhalb der Reihen größer als der Abstand s zwischen benachbarten Kernen innerhalb der Spalten ist. Sowohl die Kerne als auch die Kavitäten sind Handhabungselemente im Sinne der vorliegenden Erfindung. Handhabungselemente sind alle Elemente, die mit den Vorformlingen während der Herstellung oder der Entnahme oder der darauffolgenden Kühlung in Kontakt treten oder diese bearbeiten.

In der Regel erfolgt die Zufuhr der plastifizierten PET-Schmelze über Öffnungen im Boden der Kavitäten. Um die plastifizierte Schmelze gleichmäßig allen Kavitäten zuführen zu können, ist der Kavitätenplatte ein entsprechendes Heißkanalnetzwerk zugeordnet, welches meist in einer neben der Kavitätenplatte positionierten Heißkanalplatte angeordnet ist. Da der Anguss, d.h. der Punkt an dem die plastifizierte Schmelze der Heißkanalplatte zugeführt wird, in der Regel in der Mitte der Platte angeordnet ist, erstreckt sich das Heißkanalnetzwerk von dem Anguss zu jeder Kavität, wobei die Kanäle immer schmaler werden, je weiter sie von dem Anguss entfernt sind. In der Nähe des Angusses wird jedoch ein Abschnitt des Heißkanals einen relativ großen Querschnitt haben, sodass benachbarte Kavitäten nicht zu dicht nebeneinander angeordnet werden können.

Bei dem beschriebenen PET-Werkzeug wird deswegen häufig ein Abstand von etwa 140 mm zwischen dem Mittelpunkt einer Kavität und dem Mittelpunkt der in Reihenrichtung unmittelbar benachbarten Kavität eingehalten. Soweit im Einzelfall nichts anderes beschrieben wird, ist unter dem Abstand zwischen Handhabungselementen immer der Abstand zwischen dem Mittelpunkt eines Handhabungselementes und dem Mittelpunkt des anderen Handhabungselementes zu verstehen.

Grundsätzlich ist es gewünscht, möglichst viele Vorformlinge gleichzeitig mit einem Spritzgießwerkzeug herzustellen. Daher gibt es mittlerweile neben dem Werkzeug mit 96 Kavitäten beispielsweise auch Werkzeuge mit 128 Kavitäten oder sogar 144 Kavitäten. Da die entsprechenden Handhabungselemente in oder an Spritzgießwerkzeugplatten angeordnet sind, führt die Erhöhung der Kavitätenanzahl zu einer Schwächung der Spritzgießwerkzeugplatte. Der Abstand der Handhabungselemente innerhalb der Spalten beträgt bei den bekannten PET-Werkzeugen mindestens 50 mm. Der Abstand zwischen Handhabungselementen innerhalb der Spalten ist vorzugsweise mindestens doppelt so hoch, da in der Regel entsprechende Schieberelemente zum Öffnen der Halsbacken, die das Gewinde des Vorformlings bilden, zwischen den Spalten angeordnet werden müssen. Mit der Erhöhung der Kavitätenanzahl werden die Platten größer gewählt. So ist beispielsweise ein Werkzeug mit 144 Kavitäten bekannt, bei welchem der Abstand zwischen Handhabungselementen innerhalb der Spalten 50 mm beträgt und der Abstand innerhalb der Reihen 140 mm beträgt. Aufgrund der Größe der Spritzgießwerkzeugplatte muss auch der Heißkanal, d.h. der Kanal, durch welchen die flüssige Schmelze zugeführt wird, entsprechend lang gewählt werden. Eine bekannte Spritzgießwerkzeugplatte ist z.B. aus der US 9,956,708 bekannt. Eine Vorrichtung zur Herstellung von Thermometergehäusen ist aus der US 4,126,291 bekannt. Die EP 3 569 381 A1 beschreibt eine Universalplatte, in welcher eine Vielzahl von Vorformlingen aufbewahrt werden können.

Fast alle Kunststoffe und insbesondere Polyethylenterephthalat (PET) erfahren bei hohen Temperaturen eine thermische Schädigung. Häufig kommt es zu einer thermo-chemischen Spaltung der Moleküle. Es entstehen kurzkettige Spaltprodukte. Der Anteil an Spaltprodukten ist im Allgemeinen nicht nur von der Verarbeitungstemperatur, sondern auch vom Verarbeitungsdruck und der Verweilzeit abhängig. Gerade bei der Verwendung eines Heißkanalsystems besteht diese Gefahr insbesondere bei langen Zykluszeiten.

So entstehen beispielsweise durch die Erwärmung und die Plastifizierung von PET zwangsläufig geringe Mengen an Acetaldehyd. Dieses Acetaldehyd kann der fertige PET-Kunststoff, d.h. die PET-Flasche in die aufgenommene Flüssigkeit abgeben. Acetaldehyd ist in den hier üblicherweise auftretenden Konzentrationen gesundheitlich unbedenklich, zumal Acetaldehyd auch ein natürlicher Bestandteil von Früchten ist. Allerdings hat das Acetaldehyd einen Geruch, der beim Konsum der in der PET-Flasche aufbewahrten Flüssigkeit in der Regel nicht gewünscht ist. Insbesondere dann, wenn Mineralwasser in PET-Flaschen abgefüllt wird, akzeptiert der Verbraucher und damit auch der Flaschenhersteller nur eine sehr geringe Konzentration an Acetaldehyd.

Die Konzentration an Acetaldehyd in PET hängt jedoch von einer Vielzahl von unterschiedlichen Faktoren ab. So spielt nicht nur die Qualität des verwendeten Granulats eine Rolle, sondern beispielsweise auch die Druck- und Temperaturverhältnisse innerhalb der Schnecke, dem Heißkanal und dem eigentlichen Formwerkzeug. Insgesamt gibt es Dutzende von Parametern, die einen Einfluss auf die Verarbeitbarkeit der Schmelze und damit auch auf den Anteil der Spaltprodukte haben. Grundsätzlich müssen u. a. Temperatur, Druck und Verweildauer der plastifizierten Schmelze in Schnecke, Heißkanal und Formwerkzeug in Abhängigkeit von dem verwendeten Granulat in einem Verarbeitungsfenster gehalten werden, um die Verarbeitbarkeit der Schmelze zu gewährleisten und eine Schädigung zu vermeiden. Innerhalb des Verarbeitungsfensters können die Parameter variiert werden, ohne dass eine nennenswerte Verschlechterung der Verarbeitbarkeit festgestellt wird. Sehr wohl kann diese Variation aber den Anteil an Spaltprodukten beeinflussen. Daher müssen die Parameter optimiert werden, um die Acetaldehyd-Konzentration gering zu halten.

Es hat sich gezeigt, dass die Acetaldehyd-Konzentration in Vorformlingen, die mit einem Werkzeug mit 144 Kavitäten hergestellt worden sind, überraschenderweise größer ist als in Vorformlingen, die mit einem Werkzeug mit 72 Kavitäten hergestellt worden sind.

Ausgehend von dem beschriebenen Stand der Technik ist es daher Aufgabe der vorliegenden Erfindung eine Spritzgießmaschinebereitzustellen, die eine hohe Anzahl von Vorformlingen in einem Zyklus herstellen kann, bei welcher dennoch die Acetaldehyd-Konzentration gering gehalten werden kann.

Erfindungsgemäß wird diese Aufgabe durch eine Spritzgießmaschine nach Anspruch 1 gelöst.

Bei den bekannten Abständen von 50 mm und mehr kann es zwischen benachbarten Handhabungselementen innerhalb einer Spalte zu nicht vernachlässigbaren Druckunterschieden in der plastifizierten Schmelze kommen. Zudem treten kleine Temperaturunterschiede der plastifizierten Schmelze bei benachbarten Handhabungselementen innerhalb einer Spalte auf.

All dies wird durch den kleineren Abstand verringert. Zudem verkürzt sich die Verweilzeit der plastifizierten Schmelze im Heißkanal, da die Länge des Heißkanals verkürzt werden können.

Beste Erfahrungen wurden mit einem Abstandswert zwischen 44 und 46 mm gemacht. Noch kürzere Abstände führen zu keiner deutlichen Verbesserung.

Zwar führt die Verringerung des Abstandes der Handhabungselementen innerhalb der Spalten zu Schwierigkeiten bei der Montage der Handhabungselementen auf der Spritzgießwerkzeugplatte, die Anordnung führt jedoch zur Einsparung von 5 mm Länge je Abstand zwischen benachbarten Handhabungselementen innerhalb der Spalten. Sind beispielsweise bei einem 144-Fach-Werkzeug, d.h. einem Werkzeug mit 144 Kavitäten insgesamt 18 Handhabungselemente in einer Spalte angeordnet, so führt die erfindungsgemäße Maßnahme zu einer Reduktion der Länge der Spritzgießwerkzeugplatte um mindestens 90 mm.

In einer weiteren bevorzugten Ausführungsform ist vorgesehen, dass der Abstand r, d.h. der Abstand zwischen benachbarten Handhabungselementen innerhalb der Reihen kleiner als 140 mm, vorzugsweise kleiner als 120 mm und am besten zwischen 110 und 115 mm ist. Auch diese Maßnahme führte zu einer kompakteren Anordnung der einzelnen Handhabungselemente, was die beschriebenen Nachteile verringert.

In einer weiteren bevorzugten Ausführungsform ist vorgesehen, dass das Verhältnis r/s zwischen 2,4 und 2,8 und vorzugsweise zwischen 2,4 und 2,5 beträgt.

Es hat sich gezeigt, dass sich die Spritzgießwerkzeugplatten in geringem Maße durchbiegen. Diese Durchbiegung wird umso größer, je länger die Platte ist. Dies hat Auswirkungen auf die Handhabungselemente. Im Wesentlichen werden die Auswirkungen durch den Abstand zwischen den Handhabungselementen bestimmt. Je kleiner der Abstand zwischen den Handhabungselementen ist, umso weniger wirkt sich eine Durchbiegung der Werkzeugplatte auf benachbarte Handhabungselemente unterschiedlich aus. Daher sollten die Handhabungselemente Abstände innerhalb der Reihen haben, die kleiner als 2,8 mal so groß sind wie die Abstände innerhalb der Spalten, da ansonsten sich aufgrund der Durchbiegung der Platten Fehlanpassungen zwischen den einzelnen Handhabungselementen und den Elementen, mit denen diese Zusammenwirken ergeben.

In einer weiteren bevorzugten Ausführungsform ist vorgesehen, dass eine Reihe von Handhabungselementen durch zwei Reihengruppen von Handhabungselementen gebildet wird, wobei für den Abstand z zwischen den Reihengruppen von Handhabungselementen gilt:

$$z = r(1 + \frac{a}{n}),$$

wobei r der Abstand der Handhabungselemente innerhalb einer Reihengruppe ist und

$$n, a \in I\!N \text{ mit } n > 1,$$

wobei vorzugsweise a = 1 ist.

N ist die Menge der natürlichen Zahlen (1, 2, 3...). Durch die Aufteilung der Handhabungselemente in zwei Reihengruppen können diese beiderseits des Angusses angeordnet werden, sodass innerhalb der Reihengruppen der Abstand zwischen den Handhabungselementen reduziert werden kann, während der Abstand z zwischen dem Handhabungselement der ersten Reihengruppe, welches der zweiten Reihengruppe am nächsten angeordnet ist und dem Handhabungselement der zweiten Reihengruppe, welches der ersten Reihengruppe von Handhabungselementen am nächsten angeordnet ist, größer gewählt wird.

In der Regel ist es zweckmäßig, dass a < n und vorzugsweise n < 5 und am besten n = 3 ist.

In einer bevorzugten Ausführungsform ist vorgesehen, dass jede Reihengruppe genau vier Handhabungselemente aufweist. Beispielsweise könnte der Abstand zwischen Handhabungselementen innerhalb der Reihengruppe 110 mm betragen, während der Abstand zwischen den beiden am nächsten stehenden Handhabungselementen der beiden verschiedenen Reihengruppen 148 mm (1 + 1/3) x 111 mm beträgt.

In einer weiteren bevorzugten Ausführungsform ist vorgesehen, dass eine Spalte von Handhabungselementen durch zwei oder drei Spaltengruppen von Handhabungselementen gebildet wird, wobei für den Abstand zs zwischen den Spaltengruppen von Handhabungselementen gilt zs ≥ 2s, wobei zs der Abstand der Handhabungselemente innerhalb einer Spaltengruppe ist. In einer bevorzugten Ausführungsform beträgt zs 95 mm.

Auch wenn die Abstände zwischen benachbarten Handhabungselementen unterschiedlicher Spaltengruppen größer sein können als der Abstand zwischen benachbarten Handhabungselementen innerhalb einer Spaltengruppe ist es in einer bevorzugten Ausführungsform von Vorteil, wenn der durchschnittliche Abstand s zwischen allen benachbarten Handhabungselementen innerhalb der Spalten kleiner als 50 mm ist.

Ebenso ist es in einer bevorzugten Ausführungsform von Vorteil, wenn der durchschnittliche Abstand $\bar{r}$ zwischen allen benachbarten Handhabungselementen innerhalb der Reihen kleiner als 120 mm ist.

Die Handhabungselemente greifen in Handhabungselemente benachbarter Spritzgießwerkzeugplatten ein. Daher haben Handhabungselementen in der Regel entsprechende Zentrierflächen, wie z.B. konische Abschnitte, die zu einer exakten Ausrichtung der Spritzgießwerkzeugplatte zu einer benachbarten Spritzgießwerkzeugplatte beitragen.

Wird der durchschnittliche Abstand der Handhabungselementen zu groß gewählt, kann es zu einer Durchbiegung der Spritzgießwerkzeugplatte kommen.

Die Handhabungselemente sind meist nicht gleichmäßig über die Spritzgießwerkzeugplatte verteilt. So gibt es in der Regel Randbereiche der Platte, in denen keine Handhabungselementen angeordnet sind. Eine entsprechende passgenaue Ausrichtung einer Spritzgießwerkzeugplatte zu der benachbarten Spritzgießwerkzeugplatte ist daher lediglich in dem Bereich von entscheidender Bedeutung, in welchem Handhabungselementen angeordnet sind. Dieser Bereich wird im folgenden als Arbeitsfläche bezeichnet. Alle Handhabungselementen sind dann entweder auf der Arbeitsfläche oder zumindest auf der Grenze der Arbeitsfläche angeordnet. Sind beispielsweise die Handhabungselementen auf einer rechteckigen Arbeitsfläche in Reihen und Spalten angeordnet, so ergibt sich der Flächeninhalt F der Arbeitsfläche durch den Abstand $r_{max}$ zwischen den am weitesten beanstandeten Handhabungselemente einer Reihe multipliziert mit dem Abstand $s_{max}$ zwischen den am weitesten beanstandeten Handhabungselementen einer Spalte.

Erfindungsgemäß ergibt sich für das Verhältnis der Anzahl t der Handhabungselemente zu dem Flächeninhalt F: $\frac{t}{F} > \frac{190}{m^2}$ .

Weiterhin ist es von Vorteil, wenn eine Spalte drei Spaltengruppen aufweist, wobei zwei Spaltengruppen jeweils genau vier Handhabungselemente aufweisen und eine Spaltengruppe genau fünf Handhabungselemente aufweist, wobei vorzugsweise die Spaltengruppe mit genau fünf Handhabungselementen zwischen den zwei Spaltengruppen mit jeweils genau vier Handhabungselementen angeordnet ist. Durch diese Verteilung der Handhabungselemente werden die Fließwege minimiert und die Kraftverteilung erfolgt gleichmäßig.

In einer weiteren bevorzugten Ausführungsform ist vorgesehen, dass das Verhältnis des Abstandes $r_{max}$ zwischen den am weitesten beabstandeten Handhabungselementen eine Reihe zu dem Abstand $s_{max}$ zwischen den am weitesten beabstandeten Handhabungselemente einer Spalte zwischen 0,9 und 1,1 vorzugsweise zwischen 0,93 und 1,07 und am besten zwischen 1 und 1,06 beträgt.

Es hat sich gezeigt, dass bei der Wahl dieses Verhältnisses die Kräfteverteilung innerhalb der Werkzeugplatte homogener ist.

In einer weiteren bevorzugten Ausführungsform ist vorgesehen, dass die Spritzgießwerkzeugplatte eine im Wesentlichen rechteckige Form hat, wobei in den Eckbereichen der Spritzgießwerkzeugplatte Ausnehmungen sind, die dafür vorgesehen sind, Holme einer Spritzgießmaschine aufzunehmen. Diese Ausnehmungen können z.B. seitlich offene Ausschnitte in der Werkzeugplatte oder Durchgangsbohrungen sein.

Erfindungsgemäß ist weiter vorgesehen, dass die Handhabungselemente Kavitäten oder Kerne sind, deren Innen- bzw. Außenkontur der Außen- bzw. Innenkontur eines herzustellenden Vorformlings entspricht.

Hinsichtlich des Spritzgießwerkzeuges zur Herstellung von Vorformlingen wird die eingangs genannte Aufgabe dadurch gelöst, dass das Spritzgießwerkzeug eine Spritzgießwerkzeugplatte der beschriebenen Art, die als Kernplatte ausgebildet ist, und eine weitere Spritzgießwerkzeugplatte der eingangs beschriebenen Art, die als Kavitätenplatte ausgebildet ist, aufweist, wobei die Kavitätenplatte und die Kernplatte relativ zueinander zwischen einer geschlossenen Position und einer geöffneten Position hin und her bewegbar sind, wobei in der geschlossenen Position die als Kerne ausgebildeten Handhabungselemente der Kernplatte in die als Kavitäten ausgebildeten Handhabungselemente der Kavitätenplatte eingesetzt sind, wodurch sich zwischen Kernen einerseits und Kavitäten andererseits Formräume bilden, deren Innenkontur der Außenkontur der herzustellenden Vorformlinge entspricht.

Des Weiteren weist das Spritzgießwerkzeug eine Entnahmeplatte zur Entnahme von Vorformlingen aus der Kernplatte auf, wobei die Entnahmeplatte vorzugsweise Aufnahmehülsen aufweist, wobei die Entnahmeplatte zwischen einer Außenposition, in der die Entnahmeplatte nicht zwischen der Kavitätenplatte und der Kernplatte angeordnet ist, und mindestens einer Entnahmepositionen, in der die Entnahmeplatte zwischen der Kavitätenplatte und der Kernplatte angeordnet ist, hin und her bewegt werden kann, und eine als Nachbehandlungsplatte ausgebildete Spritzgießwerkzeugplatte der eingangs genannten Art auf, wobei bei der Nachbehandlungsplatte die Handhabungselemente Entnahmeelemente, vorzugsweise Entnahmestifte, zur Entnahme der Vorformlinge aus der Entnahmeplatte sind.

Erfindungsgemäß ist das Spritzgießwerkzeug in einer Spritzgießmaschine aufgenommen, welche vier Holme aufweist, die auf vier Eckpunkten eines Rechteckes angeordnet sind, wobei die Kernplatte und die Kavitätenplatte und vorzugsweise auch die daran vorgesehenen Handhabungselemente zwischen den vier Holmen angeordnet sind.

Dabei beträgt die lichte Breite zwischen zwei Holmen, die auf benachbarten Eckpunkten des Rechteckes angeordnet sind, in einer ersten Alternative der erfindungsgemäßen Spritzgießmaschine weniger als 1.000 mm und auf sowohl der Kernplatte als auch der Kavitätenplatte sind mindestens 136, vorzugsweise mindestens 144 Handhabungselemente angeordnet.

In einer alternativen Ausführungsform beträgt die lichte Breite zwischen zwei Holmen, die auf benachbarten Eckpunkten des Rechteckes angeordnet sind weniger als 800 mm beträgt und auf sowohl der Kernplatte als auch der Kavitätenplatte sind mindestens 120, vorzugsweise mindestens 128 Handhabungselemente angeordnet.

In einer alternativen Ausführungsform beträgt die lichte Breite zwischen zwei Holmen, die auf benachbarten Eckpunkten des Rechteckes angeordnet sind weniger als 750 mm beträgt und auf sowohl der Kernplatte als auch der Kavitätenplatte sind mindestens 88, vorzugsweise mindestens 96 Handhabungselemente angeordnet.

Durch die hohe Anzahl von Handhabungselementen auf der Arbeitsfläche werden die Kräfte, die die Spritzgießwerkzeugplatten aufeinander ausüben minimiert, da jedes einzelne Handhabungselement eine Zentrierfunktion ausübt. Daher kann die Spritzgießwerkzeugplatte in einer bevorzugten Ausführungsform mit einer Spritzgießmaschine betrieben werden, die eine deutlich geringere Schließkraft auf die Spritzgießwerkzeugplatten und damit auf die Handhabungselemente aufbringen. So ist erfindungsgemäß vorgesehen, dass eine Schließkraft von weniger als 30 kN pro gleichzeitig herzustellenden Vorformling auf die Spritzgießplatten aufgebracht wird.

In einer bevorzugten Ausführungsform wird allerdings eine Schließkraft von mehr als 20 kN pro gleichzeitig herzustellenden Vorformling auf die Spritzgießplatten aufgebracht.

Dies hat gleich eine ganze Reihe von Vorteilen. Grundsätzlich muss die Schließkraft ausreichend sein, um das Spritzgießwerkzeug beim Formteilbildungsprozess zuzuhalten. Ist die Schließkraft zu gering, so öffnet sich das Werkzeug, d.h. die Spritzgießwerkzeugplatten bewegen sich während der Einspritz- und/oder Nachdruckphase auseinander oder öffnen sich, wodurch es zu einer Gratbildung am Vorformling kommen kann. Die Schließkraft darf daher nicht zu niedrig gewählt werden. Allerding wird durch eine niedrige Schließkraft Energie eingespart. Zudem ist der Verschleiß am Werkzeug geringer.

Weitere Vorteile, Merkmale und Anwendungsmöglichkeiten der vorliegenden Erfindung werden deutlich anhand der folgenden Beschreibung bevorzugter Ausführungsformen. Es zeigen:

Figur 1     eine schematische Darstellung einer ersten erfindungsgemäßen Werkzeugplatte,

Figur 2     eine schematische Darstellung einer zweiten erfindungsgemäßen Werkzeugplatte,

Figur 3     eine schematische Darstellung einer dritten erfindungsgemäßen Werkzeugplatte,

Figur 4     eine schematische Darstellung der Druckverhältnisse zwischen den Handhabungselementen,

Figur 5     eine schematische Darstellung der Abstände bei einer Verbiegung der Werkzeugplatten und

Figur 6     eine schematische Darstellung der Situation bei einer Verkippung der Werkzeugplatten.

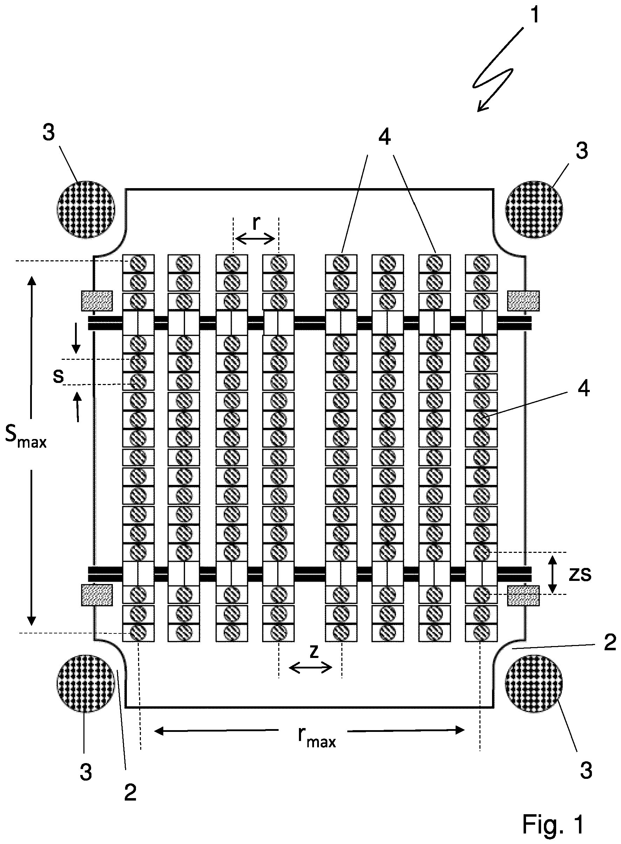

In Figur 1 ist eine schematische Darstellung einer ersten erfindungsgemäßen Werkzeugplatte 1 gezeigt. Die Werkzeugplatte 1 hat eine im Wesentlichen rechteckige Form mit Ausnehmungen 2 in den Eckbereichen. Diese Ausnehmungen dienen dazu, Platz für Holme 3 einer Spritzgießmaschine zu schaffen. Die Holme 3 sind nicht Teil der Spritzgießwerkzeugplatte sind aber dennoch in der Figur 1 dargestellt.

Die Spritzgießwerkzeugplatte 1 weist eine Vielzahl, nämlich 144, von Handhabungselementen auf, die als Kreise dargestellt sind. Die Handhabungselemente 4 sind in Reihen, die in der Figur waagerecht dargestellt sind, und in Spalten, die in der Figur senkrecht dargestellt sind, angeordnet.

Innerhalb der Spalten haben die Handhabungselemente 4 einen Abstand s voneinander, der bei der gezeigten Ausführungsform 45 mm beträgt. Innerhalb der Reihen ist der Abstand zwischen den Handhabungselementen 4 mit r bezeichnet und beträgt bei der gezeigten Ausführungsform 111 mm.

In einer Reihe sind insgesamt acht Handhabungselemente 4 angeordnet. In der gezeigten Ausführungsform sind die acht Handhabungselemente 4 in einer Reihe durch zwei Reihengruppen bestehend aus jeweils vier Handhabungselementen 4 gebildet. Zwischen den beiden Reihengruppen ist der Abstand z größer als der Abstand innerhalb der Reihengruppen. Bei der gezeigten Ausführungsform beträgt der Abstand z 148 mm.

Der Abstand zwischen den beiden äußeren Handhabungselementen 4 einer Reihe ist in der Zeichnung mit $r_{max}$ bezeichnet und beträgt in der gezeigten Ausführungsform 814 mm.

In Spaltenrichtung sind jeweils drei Spaltengruppen, die jeweils aus mehreren Handhabungselementen 4 bestehen, vorgesehen. Zwei Spaltengruppen, nämlich die in der Figur oben und unten angezeigte Spaltengruppe weisen jeweils genau drei Handhabungselemente auf, während die mittlere Spaltengruppe zwölf Handhabungselemente aufweist. Da der Abstand zwischen benachbarten Handhabungselementen innerhalb der Spaltengruppen jeweils gleich ist und 45 mm beträgt, ist der Abstand zwischen benachbarten Spaltengruppen zs mindestens doppelt so groß. In der gezeigten Ausführungsform ist er 50 mm größer als der Abstand zwischen benachbarten Handhabungselementen innerhalb der Spaltengruppen, d.h. er beträgt insgesamt 95 mm. Daraus ergibt sich ein Abstand zwischen den beiden äußersten Handhabungselementen 4 einer Spalte, der in der Zeichnung mit $s_{max}$ bezeichnet ist, von 865 mm.

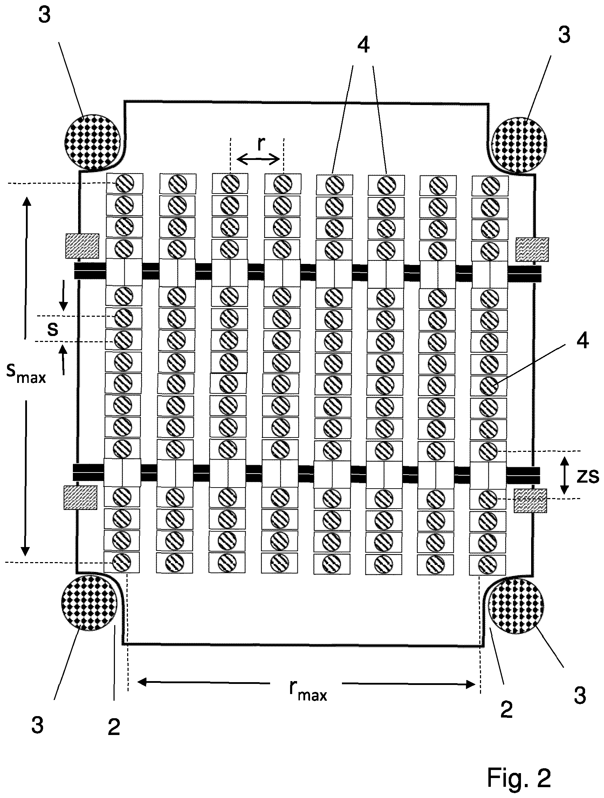

In Figur 2 ist eine zweite Ausführungsform einer Werkzeugplatte gezeigt. Diese Ausführungsform weist lediglich 128 Handhabungselemente auf, die in 8 Spalten und 16 Reihen angeordnet sind. Die Reihen weisen hier nur eine Reihengruppe von Handhabungselementen auf. In Spaltenrichtung sind jeweils drei Spaltengruppen, die jeweils aus mehreren Handhabungselementen 4 bestehen, vorgesehen. Zwei Spaltengruppen, nämlich die in der Figur 2 oben und unten angezeigten Spaltengruppen weisen jeweils genau vier Handhabungselemente auf, während die mittlere Spaltengruppe acht Handhabungselemente aufweist.

Der Abstand zwischen den beiden äußeren Handhabungselementen 4 einer Reihe ist in der Zeichnung mit $r_{max}$ bezeichnet und beträgt in der gezeigten Ausführungsform 777 mm.

In Spaltenrichtung sind jeweils drei Spaltengruppen, die jeweils aus mehreren Handhabungselementen 4 bestehen, vorgesehen. Zwei Spaltengruppen, nämlich die in der Figur oben und unten angezeigte Spaltengruppe weisen jeweils genau drei Handhabungselemente auf, während die mittlere Spaltengruppe zwölf Handhabungselemente aufweist. Da der Abstand zwischen benachbarten Handhabungselementen innerhalb der Spaltengruppen jeweils gleich ist und 45 mm beträgt, ist der Abstand zwischen benachbarten Spaltengruppen zs mindestens doppelt so groß. In der gezeigten Ausführungsform ist er 50 mm größer als der Abstand zwischen benachbarten Handhabungselementen innerhalb der Spaltengruppen, d.h. er beträgt insgesamt 95 mm. Daraus ergibt sich ein Abstand zwischen den beiden äußersten Handhabungselementen 4 einer Spalte, der in der Zeichnung mit $s_{max}$ bezeichnet ist, von 775 mm.

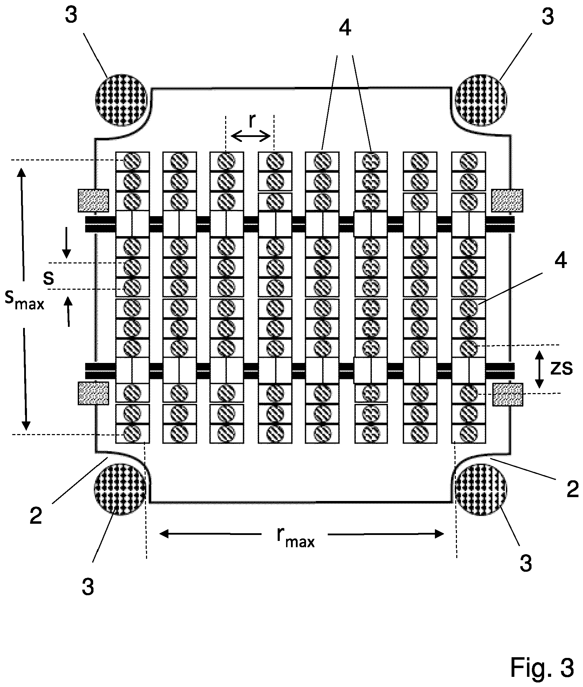

In Figur 3 ist eine dritte Ausführungsform einer Werkzeugplatte gezeigt. Diese Ausführungsform weist lediglich 96 Handhabungselemente auf, die in 8 Spalten und 12 Reihen angeordnet sind. Die Reihen weisen hier nur eine Reihengruppe von Handhabungselementen auf. In Spaltenrichtung sind jeweils drei Spaltengruppen, die jeweils aus mehreren Handhabungselementen 4 bestehen, vorgesehen. Zwei Spaltengruppen, nämlich die in der Figur 3 oben und unten angezeigten Spaltengruppen weisen jeweils genau drei Handhabungselemente auf, während die mittlere Spaltengruppe sechs Handhabungselemente aufweist.

Der Abstand zwischen den beiden äußeren Handhabungselementen 4 einer Reihe ist in der Zeichnung mit $r_{max}$ bezeichnet und beträgt in der gezeigten Ausführungsform 777 mm.

In Spaltenrichtung sind jeweils drei Spaltengruppen, die jeweils aus mehreren Handhabungselementen 4 bestehen, vorgesehen. Zwei Spaltengruppen, nämlich die in der Figur oben und unten angezeigte Spaltengruppe weisen jeweils genau drei Handhabungselemente auf, während die mittlere Spaltengruppe zwölf Handhabungselemente aufweist. Da der Abstand zwischen benachbarten Handhabungselementen innerhalb der Spaltengruppen jeweils gleich ist und 45 mm beträgt, ist der Abstand zwischen benachbarten Spaltengruppen zs mindestens doppelt so groß. In der gezeigten Ausführungsform ist er 50 mm größer als der Abstand zwischen benachbarten Handhabungselementen innerhalb der Spaltengruppen, d.h. er beträgt insgesamt 95 mm. Daraus ergibt sich ein Abstand zwischen den beiden äußersten Handhabungselementen 4 einer Spalte, der in der Zeichnung mit $s_{max}$ bezeichnet ist, von 595 mm.

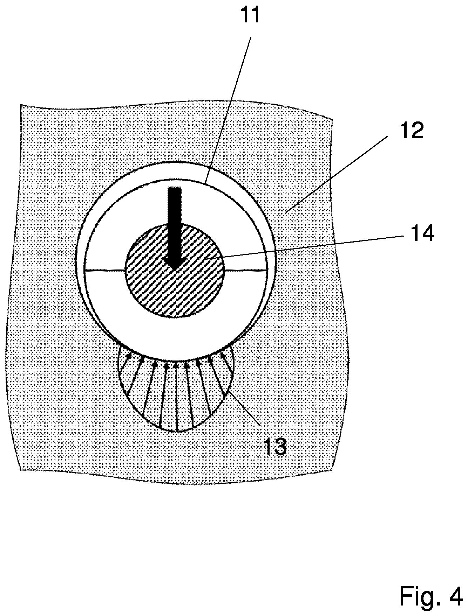

In Figur 4 sind die Druckverhältnisse zwischen Handhabungselementen benachbarter Spritzgießwerkzeugplatten dargestellt. Weist eine Spritzgießwerkzeugplatte einen Halsring 11 und einen Kern 14 und die benachbarte Spritzgießwerkzeugplatte eine Kavität 12 auf, in welche der Kern 14 eindringt, um den Formraum zu bilden und sind die beiden Werkzeugplatten zueinander in Pfeilrichtung verschoben, so erfolgt die Zentrierung der Handhabungselemente beim Schließen des Spritzgießwerkzeuges über entsprechend korrespondierend zueinander ausgeführte konische Abschnitte des Neckrings 11 und der Kavität. Aufgrund des Versatzes (dargestellt durch den Pfeil) werden die konischen Abschnitte immer an der gleichen Stelle aufeinander treffen und es kommt zu einer erhöhten Pressung in einem Bereich 13.

Aufgrund der erfindungsgemäßen Maßnahmen kann der Versatz deutlich reduziert werden, so dass der Verschleiß reduziert werden kann.

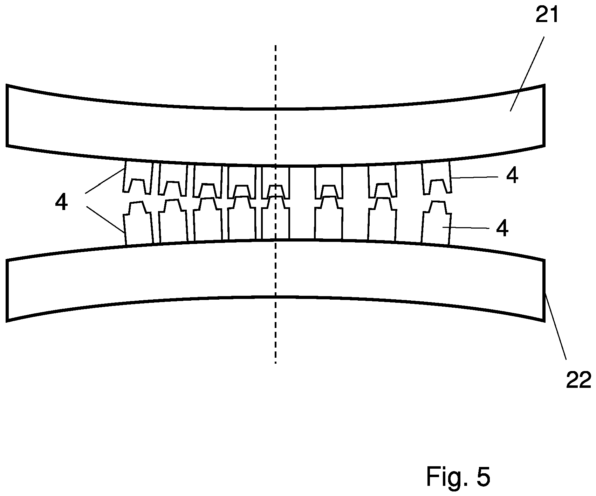

In Figur 5 ist eine schematische Darstellung zweier nebeneinander angeordneter Spritzgießwerkzeugplatten 21, 22 gezeigt. Beide Spritzgießwerkzeugplatten 21, 22 weisen entsprechende Handhabungselemente 4 auf. Auf der rechten Seite der Figur sind größere Abstände zwischen den Handhabungselementen 4 vorgesehen, wie dies im Stand der Technik der Fall ist. Auf der linken Seite sind die Abstände zwischen den einzelnen Handhabungselementen 4 erfindungsgemäß reduziert. Dadurch werden mehr Stützpunkte durch die Handhabungselemente 4 zur Verfügung gestellt, sodass es zu einer geringeren durch Biegung der Spritzgießwerkzeugplatten kommt. In der Figur ist die Durchbiegung der Spritzgießwerkzeugplatten deutlich überzeichnet. Tatsächlich ist die Durchbiegung so gering, dass sie mit bloßem Auge kaum zu erkennen ist.

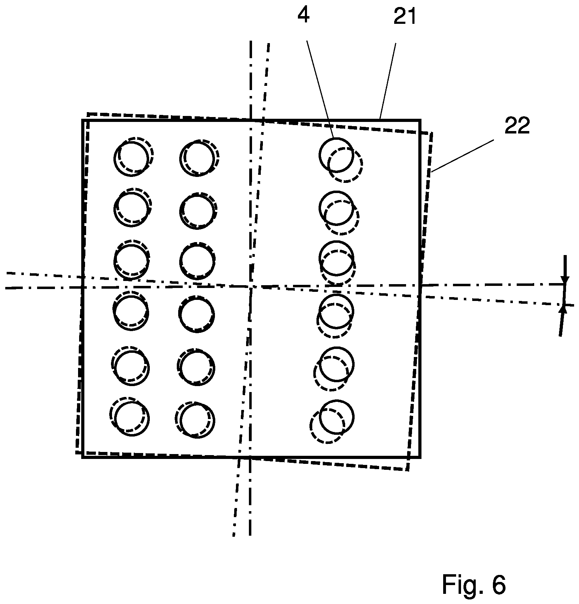

In Figur 6 ist eine schematische Darstellung zweier übereinander angeordneter Spritzgießwerkzeugplatten 21, 22 dargestellt. Aufgrund des Eigengewichtes der Spritzgießwerkzeugplatten und aufgrund von thermischen Effekten kann es zu einer Verkippung, d. h. zu einer Drehung einer Spritzgießwerkzeugplatte 21 gegenüber einer anderen Spritzgießwerkzeugplatte 22 (gestrichelt dargestellt) um eine Achse, die senkrecht auf den Spritzgießwerkzeugplatten steht, kommen.

Im rechten Teil der Figur sind die Abstände zwischen den Handhabungselementen größer gewählt als im linken Teil der Figur. Man erkennt, dass aufgrund der größeren Anzahl von Handhabungselementen ist im linken Teil der Figur zu einer weniger stark ausgeprägten Verkippung der Platten zueinander kommt.

Durch die erfindungsgemäßen Maßnahmen kann daher die Durchbiegung und die Verkippung der Spritzgießwerkzeugplatten verringert werden.

## Bezugszeichen

1    Spritzgießwerkzeugplatte
2    Ausnehmung
3    Holme
4    Handhabungselement
11   Halsring
12   Kavität
13   Bereich
14   Kern
21   Spritzgießwerkzeugplatte
22   Spritzgießwerkzeugplatte

## Patentansprüche

1.  Spritzgießmaschine mit einem Spitzgießwerkzeug zur Herstellung von Vorformlingen mit einer als Kernplatte ausgebildeten Spritzgießwerkzeugplatte und einer als Kavitätenplatte ausgebildeten Spritzgießwerkzeugplatte, wobei die Kavitätenplatte und die Kernplatte relativ zueinander zwischen einer geschlossenen Position und einer geöffneten Position hin- und her bewegbar sind, wobei in der geschlossenen Position als Kerne ausgebildete Handhabungselemente der Kernplatte in als Kavitäten ausgebildete Handhabungselemente der Kavitätenplatte eingesetzt sind, wodurch sich zwischen Kernen einerseits und Kavitäten andererseits Formräume bilden, deren Innenkontur der Außenkontur der herzustellenden Vorformlingen entspricht, einer Entnahmeplatte zur Entnahme von Vorformlingen aus der Kernplatte, wobei die Entnahmeplatte zwischen einer Außenposition, in der die Entnahmeplatte nicht zwischen der Kavitätenplatte und der Kernplatte angeordnet ist, und mindestens zwei Entnahmepositionen, in denen die Entnahmeplatte zwischen der Kavitätenplatte und der Kernplatte angeordnet ist, hin- und herbewegt werden kann, und einer als Nachbehandlungsplatte ausgebildeten Spritzgießwerkzeugplatte mit einer Mehrzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist, und der Abstand s kleiner als 50 mm ist, wobei bei der Nachbehandlungsplatte Handhabungselemente Entnahmeelemente vorzugsweise Entnahmestifte, zur Entnahme der Vorformlinge aus der Entnahmeplatte sind, wobei die als Kern- oder Kavitätenplatte ausgebildete Spritzgießwerkzeugplatte zur Herstellung einer Vielzahl v von Vorformlingen mit einer Mehrzahl von in Spalten und Reihen angeordneten Handhabungselementen vorgesehen ist, wobei die Handhabungselemente Kavitäten oder Kerne sind, deren Innen- bzw. Außendurchmesser der Außenbzw. Innenkontur des herzustellenden Vorformlings entspricht, wobei der Abstand r zwischen benachbarten Handhabungselementen innerhalb der Reihen größer als der Abstand s zwischen benachbarten Handhabungselementen innerhalb der Spalten ist, wobei der Abstand s kleiner als 50 mm ist, **dadurch gekennzeichnet, dass** der Abstand s zwischen 44 und 46 mm liegt, wobei die Spritzgießwerkzeugplatte eine Arbeitsfläche mit einem Flächeninhalt F aufweist, wobei alle Handhabungselemente entweder innerhalb der Arbeitsfläche oder auf der Grenze der Arbeitsfläche angeordnet sind, wobei die Anzahl der Handhabungselemente t beträgt und das Verhältnis $\frac{t}{F} > \frac{190}{m^2}$ beträgt, und dass die Spritzgießmaschine zur gleichzeitigen Herstellung einer Vielzahl von PET-Vorformlingen vorgesehen ist und derart ausgestaltet ist, dass während des Betriebes der Spritzgießmaschine eine Schließkraft von weniger als 30 kN pro gleichzeitig herzustellendem PET-Vorformling auf die Spritzgießplatten aufgebracht wird, wobei die Spritzgießmaschine vier Holme aufweist, welche auf vier Eckpunkten eines Rechteckes angeordnet sind, und die Handhabungselemente zwischen den vier Holmen angeordnet sind, und wobei

    i) die lichte Breite zwischen zwei Holmen, die auf benachbarten Eckpunkten des Rechteckes angeordnet sind, weniger als 1000 mm beträgt und auf sowohl der Kernplatte als auch der Kavitätenplatte mindestens 136, vorzugsweise mindestens 144 Handhabungselemente angeordnet sind, oder
    ii) die lichte Breite zwischen zwei Holmen, die auf benachbarten Eckpunkten des Rechteckes angeordnet sind weniger als 800 mm beträgt und auf sowohl der Kernplatte als auch der Kavitätenplatte mindestens 120, vorzugsweise mindestens 128 Handhabungselemente angeordnet sind, oder
    iii) die lichte Breite zwischen zwei Holmen, die auf benachbarten Eckpunkten des Rechteckes angeordnet sind weniger als 750 mm beträgt und auf sowohl der Kernplatte als auch der Kavitätenplatte mindestens 88, vorzugsweise mindestens 96 Handhabungselemente angeordnet sind.

2.   Spritzgießmaschine nach Anspruch 1, **dadurch gekennzeichnet, dass** der Abstand r kleiner als 140 mm, vorzugsweise kleiner als 120 mm und am besten zwischen 110 und 115 mm ist.

3.   Spritzgießmaschine nach Anspruch 1 oder Anspruch 2, **dadurch gekennzeichnet, dass** das Verhältnis r/s zwischen 2,4 und 2,8 und vorzugsweise zwischen 2,4 und 2,5 beträgt.

4.   Spritzgießmaschine nach einem der Ansprüche 1-3, **dadurch gekennzeichnet, dass** eine Reihe von Handhabungselementen durch zwei Reihengruppen von Handhabungselementen gebildet wird, wobei für den Abstand z zwischen den Reihengruppen von Handhabungselementen gilt,

$$z = r\left(1 + \frac{a}{n}\right)$$

wobei r der Abstand der Handhabungselemente innerhalb einer Reihengruppe ist und $n, a \in IN$ mit $n > 1$, wobei vorzugsweise a=1 ist.

5.   Spritzgießmaschine nach Anspruch 4, **dadurch gekennzeichnet, dass** $a < n$ und vorzugsweise n<5 und am besten n=3 ist.

6.   Spritzgießmaschine nach Anspruch 4 oder 5, **dadurch gekennzeichnet, dass** jede Reihengruppe genau vier Handhabungselemente aufweist.

7.   Spritzgießmaschine nach einem der Ansprüche 1-6, **dadurch gekennzeichnet, dass** eine Spalte von Handhabungselementen durch zwei oder drei Spaltengruppen von Handhabungselementen gebildet wird, wobei für den Abstand zs zwischen den Spaltengruppen von Handhabungselementen gilt zs $\geq$ 2s, wobei s der Abstand der Handhabungselemente innerhalb einer Spaltengruppe ist.

8. Spritzgießmaschine nach einem der Ansprüche 1 bis 7, **dadurch gekennzeichnet, dass** der durchschnittliche Abstand $\bar{s}$ zwischen allen benachbarten Handhabungselementen innerhalb der Spalten kleiner als 50 mm ist.

9. Spritzgießmaschine nach einem der Ansprüche 1 bis 8, **dadurch gekennzeichnet, dass** der durchschnittliche Abstand $\bar{r}$ zwischen allen benachbarten Handhabungselementen innerhalb der Reihen kleiner als 120 mm ist.

10. Spritzgießmaschine nach Anspruch 7 oder 8, **dadurch gekennzeichnet, dass** eine Spalte drei Spaltengruppen aufweist, wobei vorzugsweise entweder

   - zwei Spaltengruppen jeweils genau drei Handhabungselemente aufweisen und eine Spaltengruppe genau zwölf Handhabungselemente aufweist, wobei die Spaltengruppe mit genau zwölf Handhabungselementen zwischen den zwei Spaltengruppen mit jeweils genau drei Handhabungselementen angeordnet ist, oder
   - zwei Spaltengruppen jeweils genau vier Handhabungselemente aufweisen und eine Spaltengruppe genau acht Handhabungselemente aufweist, oder
   - zwei Spaltengruppen jeweils genau drei Handhabungselemente aufweisen und eine Spaltengruppe jeweils sechs Handhabungselemente aufweist.

11. Spritzgießmaschine nach einem der vorhergehenden Ansprüche, wobei die Spritzgießwerkzeugplatte eine im Wesentlichen rechteckige Form hat, wobei in den Eckbereichen der Spritzgießwerkzeugplatte Ausnehmungen sind, die dafür vorgesehen sind, Holme einer Spritzgießmaschine aufzunehmen.

12. Spritzgießmaschine nach einem der vorhergehenden Ansprüche, wobei die Entnahmeplatte Aufnahmehülsen aufweist.

**Claims**

1. An injection moulding machine with an injection moulding tool for the production of preforms with an injection moulding tool plate configured as a core plate and an injection moulding tool plate configured as a cavity plate, wherein the cavity plate and the core plate are movable back and forth relative to one another between a closed position and an open position, wherein, in the closed position, the handling elements of the core plate configured as cores are inserted into the handling elements of the cavity plate configured as cavities, whereby moulding spaces are formed between cores on the one hand and cavities on the other hand, whose inner contour corresponds to the outer contour of the preforms to be produced; a removal plate for removing preforms from the core plate, wherein the removal plate can be moved back and forth between an outer position in which the removal plate is not arranged between the cavity plate and the core plate and at least two removal positions in which the removal plate is arranged between the cavity plate and the core plate; and an injection moulding tool plate configured as an after-treatment plate with a plurality of handling elements arranged in columns and rows, wherein the distance r between adjacent handling elements within the rows is larger than the distance s between adjacent handling elements within the columns and the distance s is less than 50 mm, wherein, in the after-treatment plate, the handling elements are removal elements, preferably removal pins, for removing the preforms from the removal plate, wherein the injection moulding tool plate configured as a core or cavity plate is provided for the production of a plurality v of preforms having a plurality of handling elements arranged in columns and rows, wherein the handling elements are cavities or cores, whose inner and outer contour correspond to the outer and inner contour, respectively, of a preform to be produced, wherein the distance r between adjacent handling elements within the rows is larger than the distance s between adjacent handling elements within the columns, wherein the distance s is smaller than 50 mm, **characterized in that** the distance s is between 44 and 46 mm, wherein the injection moulding tool plate has a working surface with a surface content F, wherein the number of handling elements is t and the ratio is $\frac{t}{F} > 190/m^2$ and that the injection moulding machine is provided for the simultaneous production of a plurality of PET preforms and is configured in such a way that it applies during operation of the injection moulding machine on the injection moulding plates a closing force of less than 30 kN per PET preform to be produced simultaneously, wherein the injection moulding machine comprises four frame members, arranged on four vertices of a rectangle, and the handling elements are arranged between the four frame members, and wherein

   i) the clearance between two frame members arranged on adjacent vertices of the rectangle is less than 1000 mm, and at least 136, preferably at least 144, handling elements are arranged on the core plate as well as on the cavity plate, or
   ii) the clearance between two frame members arranged on adjacent vertices of the rectangle is less than 800 mm, and at least 120, preferably at least 128, handling elements are arranged on the core plate as well as on the cavity plate, or

iii) the clearance between two frame members arranged on adjacent vertices of the rectangle is less than 750 mm, and at least 88, preferably at least 96, handling elements are arranged on the core plate as well as on the cavity plate.

2. The injection moulding machine according to claim 1, **characterized in that** the distance r is less than 140 mm, preferably less than 120 mm, and preferably between 110 and 115 mm.

3. The injection moulding machine according to claim 1 or claim 2, **characterized in that** the ratio r/s is between 2.4 and 2.8 and preferably between 2.4 and 2.5.

4. The injection moulding machine according to one of claims 1-3, **characterized in that** a row of handling elements is formed by two row groups of handling elements, wherein, for the distance z between the row groups of handling elements, the following equation is valid:

$$z = r\left(1 + \frac{a}{n}\right)$$

wherein r stands for the distance of the handling elements within a row group and $n, \alpha \in IN$ where $n > 1$, wherein preferably a=1.

5. The injection moulding machine according to claim 4, **characterized in that** $\alpha < n$ and preferably n<5 and most preferably n=3.

6. The injection moulding machine according to claim 4 or 5, **characterized in that** each row group comprises exactly four handling elements.

7. The injection moulding machine according to any one of claims 1-6, **characterized in that** a column of handling elements is formed by two or three column groups of handling elements, wherein, for the distance zs between the column groups of handling elements, the following equation is valid: zs $\geq$ 2s, wherein s stands for the distance of the handling elements within a column group.

8. The injection moulding machine according to any one of claims 1 to 7, **characterized in that** the average distance $\overline{s}$ between all adjacent handling elements within the columns is less than 50 mm.

9. The injection moulding machine according to any one of claims 1 to 8, **characterized in that** the average distance $\overline{r}$ between all adjacent handling elements within the rows is less than 120 mm.

10. The injection moulding machine according to claim 7 or 8, **characterized in that** one column comprises three column groups, wherein preferably either:

- two column groups each comprise exactly three handling elements and one column group comprises exactly twelve handling elements, wherein the column group having exactly twelve handling elements is arranged between the two column groups having exactly three handling elements each, or
- two column groups each comprise exactly four handling elements and one column group comprises exactly eight handling elements, or
- two column groups each comprise exactly three handling elements and one column group comprises six handling elements.

11. The injection moulding machine according to any of the foregoing claims, wherein the injection moulding tool plate has a substantially rectangular mould, wherein recesses are provided in the corner regions of the injection moulding tool plate in order to receive frame members of an injection moulding machine.

12. The injection moulding machine according to any of the foregoing claims, wherein the removal plate has pick-up sleeves.

**Revendications**

1. Machine de moulage par injection avec un outil de moulage par injection pour la production de préformes avec une plaque d'outil de moulage par injection conçue sous la forme d'une plaque de noyau et une plaque d'outil de moulage par injection conçue sous la forme d'une plaque à cavités, la plaque à cavités et la plaque de noyau pouvant être déplacées en va-et-vient l'une par rapport à l'autre entre une position fermée et une position ouverte, dans la position fermée, des éléments de manipulation de la plaque de noyau conçus sous la forme de noyaux étant insérés dans des éléments de manipulation de la plaque à cavités conçus sous la forme de cavités, de sorte que des espaces de moulage se forment entre les noyaux d'une part et les cavités d'autre part, dont le contour intérieur correspond au contour extérieur des préformes à produire, une plaque d'enlèvement pour enlever les préformes à partir de la plaque de noyau, la plaque d'enlèvement pouvant être déplacée en va-et-vient entre une position extérieure, dans laquelle la plaque d'enlèvement n'est pas agencée entre la plaque à cavités et la plaque de noyau, et au moins deux positions d'enlèvement dans lesquelles la plaque d'enlèvement est agencée entre la plaque à cavités et la plaque de noyau, et une plaque d'outil de moulage par injection conçue sous la forme d'une plaque de post-traitement avec une pluralité d'éléments de manipulation agencés en colonnes et en rangées, la distance r entre les éléments de manipulation adjacents à l'intérieur des rangées étant supérieure à la distance s entre des éléments de manipulation adjacents à l'intérieur des colonnes et la distance s étant inférieure à 50 mm, dans le cas de la plaque de post-traitement, les éléments de manipulation étant des élément d'enlèvement, de préférence des broches d'enlèvement, pour enlever les préformes à partir de la plaque d'enlèvement, la plaque d'outil de moulage par injection conçue sous la forme d'une plaque de noyau ou à cavités étant prévue pour produire une pluralité v de préformes avec une pluralité d'éléments de manipulation agencés en colonnes et en rangées, les éléments de manipulation étant des cavités ou des noyaux dont le diamètre intérieur ou extérieur correspond au contour extérieur ou intérieur de la préforme à produire, la distance r entre des éléments de manipulation adjacents à l'intérieur des rangées étant supérieure à la distance s entre des éléments de manipulation adjacents à l'intérieur des colonnes, la distance s étant inférieure à 50 mm, **caractérisé en ce que** la distance s est comprise entre 44 et 46 mm, la plaque d'outil de moulage par injection comprenant une surface de travail d'une superficie F, tous les éléments de manipulation étant agencés soit à l'intérieur de la surface de travail, soit à la limite de la surface de travail, le nombre d'éléments de manipulation étant égal à t et le rapport étant égal à

$$\frac{t}{f} > 190/m^2$$

, et **en ce que** la machine de moulage par injection est prévue pour la fabrication simultanée d'une pluralité de préformes en PET et est conçue de telle sorte que pendant le fonctionnement de la machine de moulage par injection, une force de fermeture de moins de 30 kN par préforme de PET à produire en même temps est appliquée sur les plaques de moulage par injection, la machine de moulage par injection comprenant quatre montants qui sont agencés sur quatre angles d'un rectangle, et les éléments de manipulation étant agencés entre les quatre montants, et

    i) la largeur libre entre deux montants, qui sont agencés sur des angles adjacents du rectangle, étant inférieure à 1000 mm, et au moins 136, de préférence au moins 144 éléments de manipulation étant agencés sur la plaque centrale et la plaque à cavités, ou
    ii) la largeur libre entre deux montants qui sont agencés sur des angles adjacents du rectangle étant inférieure à 800 mm, et au moins 120, de préférence au moins 128 éléments de manipulation étant agencés sur la plaque centrale et la plaque à cavités, ou
    iii) la largeur libre entre deux montants qui sont agencés sur les angles adjacents du rectangle étant inférieure à 750 mm, et au moins 88, de préférence au moins 96 éléments de manipulation étant agencés sur la plaque centrale et la plaque à cavités.

**2.** Machine de moulage par injection selon la revendication 1, **caractérisée en ce que** la distance r est inférieure à 140 mm, de préférence inférieure à 120 mm, et de la manière la plus préférée comprise entre 110 et 115 mm.

**3.** Machine de moulage par injection selon la revendication 1 ou la revendication 2, **caractérisée en ce que** le rapport r/s est compris entre 2,4 et 2,8, et de préférence entre 2,4 et 2,5.

**4.** Machine de moulage par injection selon l'une quelconque des revendications 1 à 3, **caractérisée en ce qu'**une rangée d'éléments de manipulation est formée par deux groupes de rangées d'éléments de manipulation, la distance z entre les groupes de rangées d'éléments de manipulation étant

$$z = r\left(1 + \frac{a}{n}\right)$$

, r étant la distance entre les éléments de manipulation à l'intérieur d'un groupe de rangées et $n, \alpha \in IN$ avec $n > 1$, de préférence a = 1.

**5.** Machine de moulage par injection selon la revendication 4, **caractérisée en ce que** $a < n$ et de préférence n < 5, et de la manière la plus préférée n = 3.

**6.** Machine de moulage par injection selon la revendication 4 ou 5, **caractérisée en ce que** chaque groupe de rangées comprend exactement quatre éléments de manipulation.

**7.** Machine de moulage par injection selon l'une quelconque des revendications 1 à 6, **caractérisée en ce qu'**une colonne d'éléments de manipulation est formée par deux ou trois groupes de colonnes d'éléments de manipulation, pour la distance zs entre les groupes de colonnes d'éléments de manipulation, $zs \geq 2s$, s étant la distance entre les éléments de manipulation à l'intérieur d'un groupe de colonnes.

**8.** Machine de moulage par injection selon l'une quelconque des revendications 1 à 7, **caractérisée en ce que** la distance moyenne g entre tous les éléments de manipulation adjacents à l'intérieur des colonnes est inférieure à 50 mm.

**9.** Machine de moulage par injection selon l'une quelconque des revendications 1 à 8, **caractérisée en ce que** la distance moyenne f entre tous les éléments de manipulation adjacents à l'intérieur des rangées est inférieure à 120 mm.

**10.** Machine de moulage par injection selon la revendication 7 ou 8, **caractérisée en ce qu'**une colonne comprend trois groupes de colonnes, de préférence soit

    - deux groupes de colonnes comprenant chacun exactement trois éléments de manipulation et un groupe de colonnes comprenant exactement douze éléments de manipulation, le groupe de colonnes avec exactement douze éléments de manipulation étant disposé entre les deux groupes de colonnes avec exactement trois éléments de manipulation, ou
    - deux groupes de colonnes comprenant chacun exactement quatre éléments de manipulation et un groupe de colonnes comprenant exactement huit éléments de manipulation, ou
    - deux groupes de colonnes comprenant chacun exactement trois éléments de manipulation et un groupe de colonnes comprenant six éléments de manipulation.

11. Machine de moulage par injection selon l'une quelconque des revendications précédentes, la plaque d'outil de moulage par injection comprenant une forme sensiblement rectangulaire, des évidements se trouvant dans les zones d'angle de la plaque d'outil de moulage par injection, qui sont prévus pour recevoir les montants d'une machine de moulage par injection.

12. Machine de moulage par injection selon l'une quelconque des revendications précédentes, la plaque d'enlèvement comprenant des manchons de réception.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9956708 B
- US 4126291 A
- EP 3569381 A1